# EUROPEAN PATENT SPECIFICATION

(11) **EP 0 423 196 B1**
(45) Date of publication and mention of the grant of the patent: **22.06.1994**
(21) Application number: 89908060.0
(22) Date of filing: 28.06.1989
(51) Int. Cl.: F16L 15/00, F16L 47/00

(54) **COMPOSITE THREAD COUPLING FOR REINFORCED PIPE**
KUPPLUNG MIT GEMISCHTEM GEWINDE FÜR VERSTÄRKTE LEITUNG
ACCOUPLEMENT A FILETAGE MIXTE POUR TUBE RENFORCE

(30) Priority: 28.06.1988 US 212599
(43) Date of publication of application: 24.04.1991
(73) Proprietor: A.O. SMITH CORPORATION, Milwaukee, WI 53223-0990 (US)
(72) Inventor: ELLSWORTH, Phillip, G., Wichita, KS 67217 (US); BAUER, Gregory, D., Wichita, KS 67212 (US)
(74) Representative: Altenburg, Udo, Dipl.-Phys.
(86) International application number: US8902790
(87) International publication number: WO9000236

(56) References cited:
- US-A- 658 085
- US-A- 2 900 435
- US-A- 3 101 207
- US-A- 3 366 504
- US-A- 4 033 167
- US-A- 4 154 466
- US-A- 4 537 426

## Description

### Background Of The Invention

The invention relates to couplings for non-ferrous pipe (or tubing) of plastic or fiberglass, for example. More particularly, the invention relates to glass reinforced resin pipe having premolded or contact molded end portions (male and female threads) for joining the end portions together.

Resin pipe reinforced with glass filamentous material is well known to the art and possesses a number of advantages over metal pipe, e.g., inertness, low weight, corrosive resistance, and high strength. These properties make such pipes particularly suitable for use in the chemical processing industry and in the oil industry for use as line pipe, down hole tubing, etc.

Threaded end portions of glass reinforced resin pipes have been formed by a number of methods. One method employs the use of discrete coupling members (bonded to the pipes) providing threaded adjacent ends to the pipes to be joined. However, since the adjacent ends of such pipes are joined by an interposed connector, the possibility for leakage is doubled. In addition, the time and effort necessary for assembly is increased as well as the possibility for damage during assembly.

The use of threaded pipe end portions is a considerable improvement over the employment of discrete coupling members. However, the formation of threaded end portions simultaneously with the formation of the pipe by virtue of a threaded coupling-like member over the end portion of a rotatable mandrel, for example, is also subject to some disadvantages. For example, care must be taken to avoid the entrapment of air in the resin in the formation of the threads and to assure uniform and complete filling of the threads. Thus, an extra step is introduced into the formation of the pipe. The application of release agents to the threaded nipple end must also be carefully applied to insure a good release of the thread and further to prevent any damage to the threads when the finished pipe is removed from the mandrel.

Another method involves scribing grooves in a finished pipe to form threads therein. Although this is a workable arrangement, it is not without drawbacks. The scribing procedure results in broken reinforcement threads and exposed fiberglass strands in the pipe. However, a joint having scribed grooves on the mating male and female members provides the distinct benefit of enhanced tensile strength in the area of the coupling when compared to coupling elements bonded or otherwise molded to the fiberglass pipe. In other words, the scribed grooves of a male/female coupling provide a direct mechanical interlock between the substrates of the joined pipes. Such pipes possess increased tensile strength in the coupling portion which corresponds to the relatively greater interlaminar shear strength of a scribed thread compared to a molded thread.

What emerges from the evolvement to date of fiberglass pipe male/female type couplings is a number of advantages and disadvantages associated with purely scribed grooves in the pipe on the one hand and paste threads contact molded to the pipe laminate on the other hand.

Scribed threads are ground into the pipe laminate and necessarily involve excess resin material (for the amount ground away). The grinding and scribing processes applied may involve broken or cut threads or exposed fiberglass strands and the potential rejection of the thread after the entire pipe has been formed. However, the ground or scribed male and female thread joint provides the distinct advantage of a mechanical interlock tied integrally to the pipe laminate. The interlaminar shear strength of ground threads is recognized to be relatively greater than that of paste or molded threads whereby the corresponding tensile strength of the joint is enhanced.

In regard to paste or contact molded threads formed on the pipe laminate ends to be joined, certain advantages and disadvantages also exist. The primary disadvantage resides in the fact that a paste or molded thread does not provide mechanical interlock between the joined pipe laminates because only an adhesive bond exists between the paste threads and the pipe laminate. However, the paste or molded threads provide a more consistent thread profile with a corresponding relatively smooth finish, resulting in relatively lower engagement, and more significantly disengagement, torque requirements. Furthermore, the paste or molded thread has less of a tendency to powder during engagement than does the relatively rough surface of a thread scribed into the pipe laminate material. Also, a paste or molded thread includes a more random orientation of reinforcement materials when compared to the reinforcement strands or threads which may be cut in the pipe laminate during grinding of a scribed thread. In other words, a random orientation of reinforcement materials with respect to the shear plane of the scribed threads results in a relatively stronger joint.

The above considerations are important in considering the application and use of the joint. For example, in an oil field situation utilizing a string of fiberglass pipes or tubes, it is obviously important that sufficient interlaminar shear strength exist at a joint. Put another way, it is important that the overall tensile strength of a pipe string not be unduly limited by potential separation of any one joint during use of the string. The tensile strength of the joints is also of significance in a horizontal pipe application. For example, a horizontal pipe typically will have a hydrostatic pressure associated with it which develops an end load on a pipe string which in turn exerts a tensile force on the pipe joints in an axial direction. In short, the tensile or axial force considerations in both a vertical and horizontal pipe string are the same with respect to the present invention.

The US-A-3101207 (Pavel) discloses a gas-tight and readily separable tube connection comprising threaded tubes, for example made of plastic, having on threads of at least one of said tubes an adherent hardened layer. This layer consists of a synthetic resin hardenable without giving off volatile components and processing a sufficient hardness and elasticity. Its application may be accomplished in any desired manner, for example by dipping, painting with a brush, spraying or with a putty knife. Its thickness may vary within wide limits and depends, among other factors, upon the diameter of the tubes. As the problem of the US-A-3101207 is to produce gas-tight and easily joinable and separable threaded tube connections the layer has to be flexible after hardening.

Accordingly, an object of the present invention is to provide an improved coupling for joined fiberglass pipe sections in the sense that the joint will have significantly improved tensile strength in an axial direction when compared to certain prior art couplings.

Another object of the present invention is to provide a fiberglass pipe coupling which includes enhanced tensile strength as referred to above and which further includes the benefits of a paste thread interface on the male/female coupling surfaces.

A still further object of the present invention is to provide the aforesaid coupling in a manner which can be easily made a part of the fabrication process for fiberglass pipe.

The present invention provides for scribed or ground male and female threads on adjacent ends of two fiberglass pipe sections to be joined. At least one of the scribed threaded surfaces has a paste thread contact molded thereon so that the root or base of the paste thread is below the crest of the ground thread to which it is molded. The pitch of the contact molded thread is the same as the ground thread to which it mates. Upon mating off the coupled pipe ends, the paste thread surface provides the advantages enumerated above while also providing a mechanical interlock between the pipe sections. Mechanical interlock results from the overlapped projections of the male and female threads ground into the fiberglass pipes. The paste thread may be provided on either the maple or female portion of the coupling. Alternatively, within the scope of the present invention, a paste thread may be formed on both the male and female scribed portions of the coupling. In this embodiment, the root or base of the paste threads on each joint portion are below the crest of the ground threads to which they are molded. As a further alternative embodiment of the present invention, it is comprehended that the aforesaid paste thread on a fiberglass pipe could be directly joined with the mating end of a steel or metallic pipe having integrally ground threads. Although reference has been made throughout to fiberglass reinforced pipe, it is also to be understood that carbon, polyester or other functionally equivalent fibers, in addition to the more traditional glass fibers could be used to reinforce the pipe resin within the scope of the present invention.

With these and other objects in view which will more readily appear as the nature of the invention is better understood, the invention consists in the pipe or pipes as defined by claims 1, 2 or 3.

FIGURE 1 is a longitudinal view in cross section of two fiber reinforced pipe ends having a male and female portion for coupling the same together. The female portion includes threads ground directly into the pipe laminate. The male portion has paste threads contact molded onto threads which are also scribed into the pipe laminate.

FIGURE 1A is an enlarged, isolated view of the thread engagement illustrated in Figure 1.

FIGURE 2 is a view similar to Figure 1 with the contact molded paste threads being placed on the female portion of the coupling instead of the male portion.

FIGURE 2A is an enlarged, isolated view of the thread engagement illustrated in Figure 2.

FIGURE 3 is a longitudinal view in cross section of two fiber reinforced pipe ends having a male and female portion for coupling the same together. Each portion includes threads ground directly into the pipe laminate with paste threads contact molded to the threads scribed into the respective pipe laminates.

FIGURE 3A is an enlarged, isolated view of the thread engagement illustrated in Figure 3.

Similar reference characters designate corresponding parts throughout the several figures of the drawings.

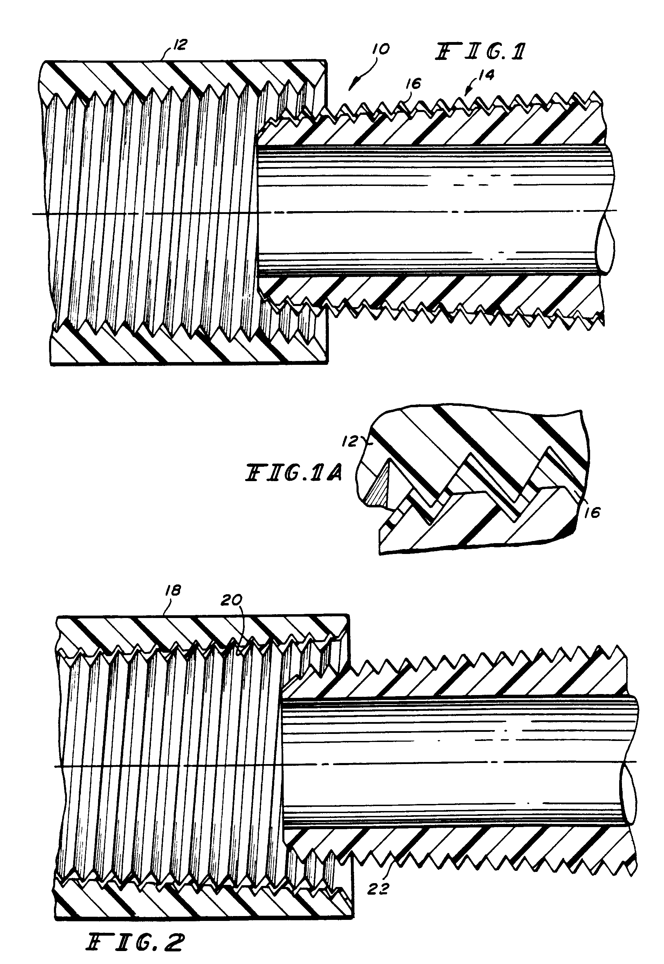

Pipe joint 10 in Figure 1 is provided for connecting the ends of a pair of non-ferrous (e.g., fiberglass or plastic) pipe sections 12 and 14. The pipe sections have tapered ends as shown and correspondingly tapered male and female coupling portions. Each pipe section 12 and 14 is formed of resin including embedded strands of glass filaments (for example) for reinforcement purposes, as is well known in the art. As mentioned above, the reinforcement filaments could also be carbon, polyester or other functionally equivalent materials.

In the Figure 1 embodiment, female threads are ground into the laminate body of pipe 12 and may, for example, have an eight round thread as is widely used in such fiberglass pipe applications. In the male pipe portion 14, threads are also scribed into the laminate body of the pipe and include a pitch corresponding to that on the female pipe coupling portion. The ground threads on pipe portion 14 are in turn provided with an overlying paste thread or contact molded thread 16 which includes the same pitch as the threads scribed into the resin pipe bodies. The contact molded thread 16 is preferably formed of the same resin that is used to fabricate pipe body 14. With the molded thread 16 bonded to pipe body 14, and both being formed of the same resin material, thermal expansion and contraction is easily accommodated since there is no rate differential. The paste thread 16 has filler material in it to control viscosity and chopped fibers to provide further reinforcement to the thread 16. The chopped fibers in the plastic thread 16 are randomly oriented as opposed to the wound reinforcement filaments in the fiberglass pipe bodies.

Upon engagement as illustrated in Figure 1A, the crest of the threads scribed into each of the joined fiberglass pipes overlap one another and provide a mechanical interlock with the reinforced plastic thread 16 being sandwiched therebetween. This is a distinct advantage over the prior art structures which rely on the adhesion of a molded plastic thread to an underlying pipe body for tensile strength purposes. Preferably the ground threads are relatively shallow in order to minimize the cutting of the wound reinforcement threads or filaments in each of the pipe sections. Of course, in minimizing the cutting of the reinforcement threads in the pipe body, the reduction in reinforcement provided to the pipe body is minimized, and the wasted material of the pipe body due to grinding is minimized. With the engagement arrangement of the joint of the present invention, it is possible, therefore, to have an effective joint of enhanced tensile strength while minimizing the depth of the ground or scribed threads in the pipe body laminates.

In addition to the enhanced tensile strength characteristics of the coupling provided by the present invention, the provision of the contact molded thread surface provides for a more consistent, smooth thread engagement surface. This in turn translates into a relatively lower engagement and disengagement torque than would be the case, for example, if a ground thread were engaged with another ground thread. Of course, with a smoother thread surface, there is also a reduced tendency of the paste thread to powder or abrade when compared to the relatively abrasive surface of the ground thread if it were engaged with another ground thread.

Figures 2 and 2A show another embodiment of the present invention with the female portion 18 of the joint having a contact molded thread surface 20 over the female threads ground into the pipe body 18. Correspondingly, the male pipe portion 22 only has threads ground into the pipe body. All of the same considerations applicable to the embodiment illustrated in Figures 1 and 1A apply to the embodiment illustrated in Figures 2 and 2A.

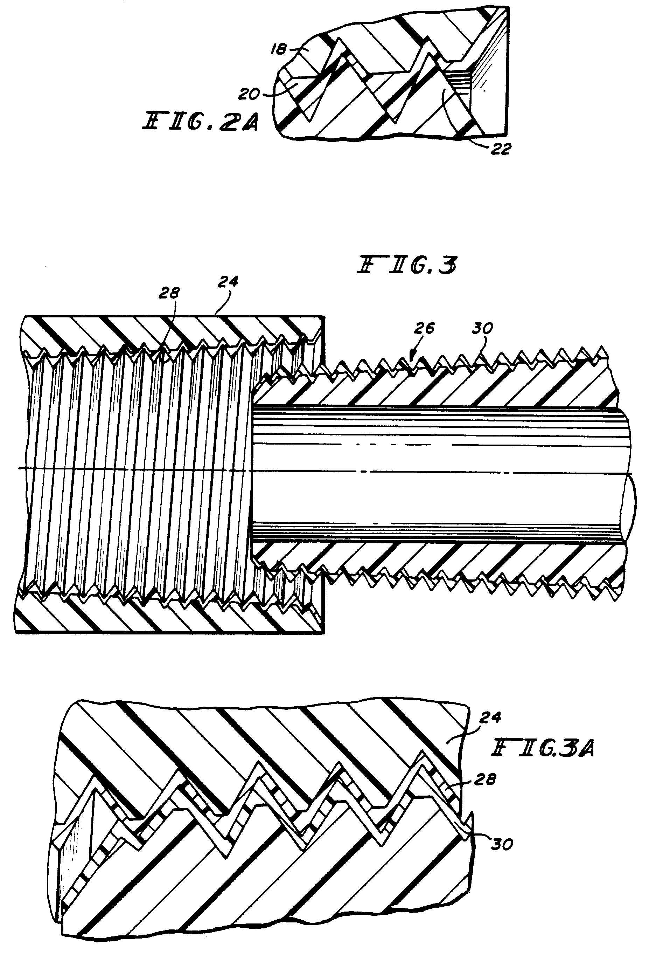

Figures 3 and 3A illustrate yet another embodiment of the present invention. In this embodiment, both the female pipe coupling portion 24 and the male portion 26 have threads of resin material molded to the threads scribed into the respective pipe bodies. The contact molded threads are designated at 28 on female portion 24 and at 30 on male portion 26.

The embodiment illustrated in Figures 3 and 3A would be used where relatively close thread tolerances are required and in difficult field applications for example where relatively lower engagement and disengagement torques might be desired. In addition, the Figure 3 embodiment could be utilized when it is desired to have increased corrosion resistance since the molded paste thread surface is more effective in resisting corrosion than is the surface provided by threads scribed into the pipe body.

However, the Figure 3 embodiment, as in the Figure 1 and Figure 2 embodiments, has as its principal advantage the mechanical interlock provided by the overlapping crests on the threads scribed into each of the coupled pipe bodies and the desirable characteristics associated with the contact molded thread surface as considered above.

Lastly, it is comprehended that a fiber reinforced pipe having a scribed thread end with a contact molded paste thread thereover (as described above) could be directly joined to a steel or metallic pipe end. The metallic pipe would have mating integrally ground threads whereby the mechanical overlap and associated benefits described above would exist.

## Claims

1. A pipe made of plastic having a male threaded end portion suitable for making a connection exhibiting superior tensile strength to a female threaded member and a layer of a synthetic resin on said male threads, being sufficiently thin to ensure that the valleys of said layer extend below the crests of said male threads to allow the crests of threads on a said female member to extend below said crests of said male threads after said pipe has been threadably attached to said female member, said synthetic resin containing a filler,
**characterized in that**
the pipe is made of resin reinforced with wound filaments,
the male threads are scribed and cut shallowly into the exterior surface of said end portion of said pipe whereby cutting of said wound filaments is minimized and the strength of the body of said pipe is maintained by cutting to a depth sufficient to allow the crests of threads on a said female member having threads of the same pitch as the threads on the male member to overlap said crests of said male scribed threads after said pipe has been threadably attached to said female member, but not deep enough to cause significant cutting of said wound filaments and resultant reduction in the tensile strength of said connection,
the layer is formed as smooth contact moulded threads, being made of the same resin as said pipe, excluding said wound filament therein, and reinforced with randomly-oriented chopped fibers, overlying said scribed threads and having approximately the same pitch as said scribed threads, wherein said contact moulded threads have the same thermal expansion characteristics as said pipe as well as a consistent and controlled thickness, such that they are sufficiently thick to provide a consistent, smooth thread engagement surface.

2. A pipe made of plastic having a female threaded end portion suitable for making a connection exhibiting superior tensile strength to a male threaded member, and a layer of a synthetic resin on said female threads, being sufficiently thin to ensure that the valleys of said layer extend below the crests of said female threads to allow the crests of threads on a said male member to extend below said crests of said male threads after said pipe has been threadably attached to said female member, said synthetic resin containing a filler,
**characterized in that**
the pipe is made of resin reinforced with wound filaments,
the female threads are scribed and cut shallowly into the exterior surface of said end portion of said pipe whereby cutting of said wound filaments is minimized and the strength of the body of said pipe is maintained by cutting to a depth sufficient to allow the crests of threads on a said male member having threads of the same pitch as the threads on the female member to overlap said crests of said female scribed threads after said pipe has been threadably attached to said male member, but not deep enough to cause significant cutting of said wound filaments and resultant reduction in the tensile strength of said connection,
the layer is formed as smooth contact moulded threads, being made of the same resin as said pipe, excluding said wound filament therein, and reinforced with randomly-oriented chopped fibers, overlying said scribed threads and having approximately the same pitch as said scribed threads, wherein said contact moulded threads have the same thermal expansion characteristics as said pipe as well as a consistent and controlled thickness, such that they are sufficiently thick to provide a consistent, smooth thread engagement surface.

3. First and second pipes made of plastic having a male threaded and a female threaded end portion respectively suitable for making a connection exhibiting superior tensile strength to each other, and a layer of a synthetic resin on said threads, being sufficiently thin to ensure that the valleys of said layer extend below the crests of the threads of the same pipe and the crests of said threads on each pipe extend below said crests of the threads of the other pipe after said pipes have been threadably attached together, said synthetic resin containing a filler,
**characterized in that**
the pipes are made of resin reinforced with wound filaments,
the threads are scribed and cut shallowly into the exterior surface of said end portions of said pipes and have approximately the same pitch whereby cutting of said wound filaments is minimized and the strength of the body of said pipes is maintained by cutting to a depth sufficient to ensure that the crests of said scribed threads overlap each other after said pipes have been threadably attached together, but not deep enough to cause significant cutting of said wound filaments and resultant reduction in the tensile strength of said connection,
the layer is formed as smooth contact moulded threads, being made of the same resin as said pipes, excluding said wound filament therein, and reinforced with randomly-oriented chopped fibers, overlying said scribed threads and having approximately the same pitch as said scribed threads, wherein said contact moulded threads have the same thermal expansion characteristics as said pipes as well as a consistent and controlled thickness, such that they are sufficiently thick to provide a consistent, smooth thread engagement surface.

## Patentansprüche

1. Aus Kunststoff hergestellte Rohrleitung mit einem Außengewindeendabschnitt, der geeignet ist zum Herstellen einer eine höhere Zugspannung gewährleistenden Verbindung mit einem Innengewindeelement und einer Schicht aus einem synthetischen Harz auf dem Außengewinde, das ausreichend dünn ist, um sicherzustellen, daß die Kehlen der Schicht sich unter die Spitzen des Außengewindes erstrecken, damit sich die Spitzen des Gewindes auf einem Innengewindeelement unter die Spitzen des Außengewindes erstrecken, nachdem die Rohrleitung mit dem Innengewindeelement gewindemäßig verbunden worden ist, wobei das synthetische Harz ein Füllmittel enthält,
**dadurch gekennzeichnet,** daß
die Rohrleitung aus mit gewundenen Fäden verstärktem Harz hergestellt ist, das Außengewinde flach in die äußere Oberfläche des Endabschnittes der Rohrleitung eingeritzt und geschnitten ist, wodurch ein Schneiden der gewundenen Fasern minimiert wird und die Festigkeit des Körpers der Rohrleitung durch Schneiden auf eine Tiefe beibehalten wird, die ausreichend ist, damit die Spitzen des Gewindes auf dem Innengewindeelement, dessen Gewinde dieselbe Steigung wie das Gewinde auf dem Außengewindeelement hat, die Spitzen des eingeritzten Außengewindes überlappen können, nachdem die Rohrleitung gewindemäßig an dem Innengewindeelement befestigt worden ist, jedoch nicht tief genug, um ein signifikantes Schneiden der gewundenen Fasern und eine resultierende Reduzierung in der Zugfestigkeit der Verbindung zu bewirken, die Schicht als glattes, kontaktangegossenes Gewinde ausgebildet ist, das aus demselben Harz wie die Rohrleitung hergestellt ist, und zwar ausschließlich der gewundenen Fasern darin, und mit zufällig ausgerichteten geschnittenen Fasern verstärkt ist, die eine Deckschicht über dem eingeschnittenen Gewinde bildet und etwa dieselbe Steigung wie das eingeschnittene Gewinde hat, wobei das kontaktangegossene Gewinde dieselben thermischen Expansionscharakteristiken hat wie die Rohrleitung, sowie eine konsistente und kontrollierte Dicke, so daß sie ausreichend dick sind, um eine konsistente glatte Gewindeeingriffsfläche zu schaffen.

2. Aus Kunststoff hergestellte Rohrleitung mit einem Innengewindeendabschnitt, die geeignet ist zum Herstellen einer eine höhere Zugfestigkeit aufweisenden Verbindung mit einem Außengewindeelement und einer Schicht aus einem synthetischen Harz auf dem Innengewinde, die ausreichend dünn ist, um sicherzustellen, daß die Kehlen der Schicht sich unter die Spitzen des Innengewindes erstrecken, damit sich die Spitzen des Gewindes auf dem Außengewinde unter die Spitzen des Außengewindes erstrecken, nachdem die Rohrleitung an dem Gewindeelement angeschraubt worden ist, wobei das synthetische Harz einen Füller enthält,
dadurch gekennzeichnet, daß
die Rohrleitung aus mit gewundenen Fasern verstärktem Harz hergestellt ist, das Innengewinde flach in die äußere Oberfläche des Endabschnittes der Leitung eingeritzt und geschnitten ist, wodurch ein Schneiden der gewundenen Fasern minimiert wird und die Festigkeit des Körpers der Rohrleitung durch Schneiden bis zu einer Tiefe beibehalten wird, die ausreichend ist, damit die Spitzen des Gewindes auf dem Außengewindeelement, dessen Gewinde dieselbe Steigung wie das Gewinde des Innenelementes aufweist, die Spitzen des eingeschnittenen Innengewindes überlappt, nachdem die Rohrleitung an dem Außengewindeelement angeschraubt worden ist, jedoch nicht tief genug, um ein signifikantes Schneiden der gewundenen Fasern und der resultierenden Reduzierung der Zugfestigkeit der Verbindung zu bewirken, die Schicht als glattes kontaktangegossenes Gewinde ausgebildet ist, das aus demselben Harz wie die Rohrleitung hergestellt ist, und zwar ausschließlich der gewundenen Fasern darin, und mit zufällig ausgerichteten geschnittenen Fasern verstärkt ist, die eine Deckschicht über das eingeschnittene Gewinde bildet und etwa dieselbe Steigung wie das eingeschnittene Gewinde haben, wobei das kontaktangegossene Gewinde dieselben thermischen Expansionskoeffizienten wie die Rohrleitung sowie eine konsistente und kontrollierte Dicke hat, sodaß sie ausreichend dick sind, um eine konsistente glatte Gewindeeingriffsfläche zu schaffen.

3. Aus Kunststoff hergestellte erste und zweite Rohrleitungen mit jeweils einem Außengewinde- und einem Innengewindeendabschnitt, die geeignet sind zum Herstellen einer eine höhere Zugfestigkeit zueinander aufweisende Verbindung, und eine Schicht aus einem synthetischen Harz auf dem Gewinde, die ausreichend dünn ist, um sicherzustellen, daß die Kehlen der Schicht sich unter die Spitzen des Gewindes derselben Rohrleitung erstrecken und die Spitzen des Gewindes auf jeder Rohrleitung sich unter die Spitzen des Gewindes der anderen Rohrleitung erstrecken, nachdem die Rohrleitungen gewindemäßig miteinander verbunden worden sind, wobei das synthetische Harz ein Füllmittel enthält,
dadurch gekennzeichnet, daß
die Rohrleitungen aus mit gewundenen Fasern verstärktem Harz herstellt sind, die Gewinde flach in die äußere Oberfläche der Endabschnitte der Rohrleitungen eingeritzt und geschnitten sind und etwa dieselbe Steigung haben, wodurch ein Schneiden der gewundenen Fasern minimiert wird und die Festigkeit des Körpers der Rohrleitungen durch Schneiden bis zu einer Tiefe beibehalten wird, die ausreichend ist, um sicherzustellen, daß die Spitzen des eingeritzten Gewindes sich einander überlappen, nachdem die Rohrleitungen zusammengeschraubt worden ist, jedoch nicht tief genug, um ein signifikantes Schneiden der gewundenen Fasern und eine resultierende Reduzierung der Zugfestigkeit der Verbindung zu bewirken,
die Schicht aus glattem kontaktangegossenen hergestellten Gewinde besteht, das aus demselben Harz wie die Rohrleitungen hergestellt ist, ausschließlich der gewundenen Fasern darin, und mit zufällig ausgerichteten geschnittenen Fasern verstärkt ist, die eine Deckschicht über das eingeschnittene Gewinde bildet und etwa dieselbe Steigung wie das eingeschnittene Gewinde aufweist, wobei das kontaktangegossene Gewinde dieselben thermischen Expansionscharakteristiken wie die Rohrleitungen sowie eine konsistente und kontrollierte Dicke aufweist, so daß es ausreichend dick ist, um eine konsistente glatte Gewindeeingriffsfläche zu schaffen.

## Revendications

1. Un tube réalisé en matière plastique, comportant une partie d'extrémité mâle filetée permettant de réaliser une liaison présentant une très haute résistance à la traction, avec un élément femelle taraudé, et sur les filets mâles une couche de résine synthétique suffisamment mince pour permettre aux sillons de cette couche de s'étendre audessous des crêtes des filets mâles afin de permettre aux crêtes des filets d'un susdit élément femelle de s'étendre au-dessous de ces crêtes des filets mâles après que le tube ait été monté par vissage sur l'élément femelle, cette résine synthétique contenant une charge,
**caractérisé en ce que**
le tube est réalisé en résine armée de filaments enroulés,
les filets mâles sont entaillés et découpés peu profondément dans la surface extérieure de ladite partie d'extrémité du tube, la découpe des filaments enroulés étant minimisée et la résistance du corps du tube étant conservée par découpe à une profondeur suffisante pour permettre aux crêtes des filets d'un élément femelle possédant des filets du même pas que les filets de l'élément mâle de recouvrir les crêtes des filets mâles entaillés après que le tube ait été monté par vissage sur l'élément femelle, mais pas suffisamment profondément pour provoquer une découpe significative des filaments enroulés et une réduction corrélative de la résistance à la traction de cette liaison,
la couche est formée en filets lisses moulés par contact, étant constituée de la même résine que le tube, à l'exception des filaments enroulés qui s'y trouvent, et renforcée de fibres découpées orientées de manière aléatoire recouvrant les filets entaillés et présentant approximativement le même pas que ces filets entaillés, les filets moulés par contact ayant les mêmes caractéristiques de dilatation thermique que le tube, de même qu'une épaisseur homogène et contrôlée afin d'être suffisamment épais pour donner une surface homogène de contact aux filets lisses.

2. Un tube réalisé en matière plastique, comportant une partie d'extrémité femelle taraudée permettant de réaliser une liaison présentant une très haute résistance à la traction, avec un élément mâle fileté, et sur les filets femelles une couche de résine synthétique suffisamment mince pour permettre aux sillons de cette couche de s'étendre au-dessous des crêtes des filets femelles afin de permettre aux crêtes des filets d'un susdit élément mâle de s'étendre au-dessous de ces crêtes des filets mâles après que le tube ait été monté par vissage sur l'élément femelle, cette résine synthétique contenant une charge,
**caractérisé en ce que**
le tube est réalisé en résine armée de filaments enroulés,
les filets femelles sont entaillés et découpés peu profondément dans la surface extérieure de ladite partie d'extrémité du tube, la découpe des filaments enroulés étant minimisée et la résistance du corps du tube étant conservée par découpe à une profondeur suffisante pour permettre aux crêtes des filets d'un élément mâle possédant des filets du même pas que les filets de l'élément femelle de recouvrir les crêtes des filets femelles entaillés après que le tube ait été monté par vissage sur l'élément mâle, mais pas suffisamment profondément pour provoquer une découpe significative des filaments enroulés et une réduction corrélative de la résistance à la traction de cette liaison,
la couche est formée en filets lisses moulés par contact, étant constituée de la même résine que le tube, à l'exception des filaments enroulés qui s'y trouvent, et renforcée de fibres découpées orientées de manière aléatoire recouvrant les filets entaillés et présentant approximativement le même pas que ces filets entaillés, les filets moulés par contact ayant les mêmes caractéristiques de dilatation thermique que le tube, de même qu'une épaisseur homogène et contrôlée afin d'être suffisamment épais pour donner une surface homogène de contact aux filets lisses.

3. Un premier et un second tubes réalisé en matière plastique, comportant, respectivement, une partie d'extrémité mâle filetée et une partie d'extrémité femelle taraudée permettant de réaliser une liaison présentant une très haute résistance à la traction entre elles, et sur ces filets une couche de résine synthétique suffisamment mince pour permettre aux sillons de cette couche de s'étendre au-dessous des crêtes des filets du même tube, et les crêtes des filets de chaque tube s'étendant au-dessous des crêtes des filets de l'autre tube après que les tubes aient été montés ensemble par vissage, cette résine synthétique contenant une charge,
**caractérisés en ce que**
les tubes sont réalisés en résine armée de filaments enroulés,
les filets sont entaillés et découpés peu profondément dans la surface extérieure desdites parties d'extrémité des tubes et ont approximativement le même pas, la découpe des filaments enroulés étant minimisée et la résistance du corps du tube étant conservée par découpe à une profondeur suffisante pour s'assurer que les crêtes des filets des éléments entaillés se recouvrent entre eux après que les tubes aient été montés ensemble par vissage, mais pas suffisamment profondément pour provoquer une découpe significative des filaments enroulés et une réduction corrélative de la résistance à la traction de cette liaison,
la couche est formée en filets lisses moulés par contact, étant constituée de la même résine que les tubes, à l'exception des filaments enroulés qui s'y trouvent, et renforcée de fibres découpées orientées de manière aléatoire recouvrant les filets entaillés et présentant approximativement le même pas que ces filets entaillés, les filets moulés par contact ayant les mêmes caractéristiques de dilatation thermique que les tubes, de même qu'une épaisseur homogène et contrôlée afin d'être suffisamment épais pour donner une surface homogène de contact aux filets lisses.
